# EUROPEAN PATENT SPECIFICATION

(11) **EP 0 304 040 B1**
(45) Date of publication and mention of the grant of the patent: **11.01.1995**
(21) Application number: 88113367.2
(22) Date of filing: 17.08.1988
(51) Int. Cl.: C08L 67/00, C08L 69/00, C08L 71/12

(54) **Thermoplastic resin composition.**
Mischung von thermoplastischen Harzen.
Composition de résines thermoplastiques

(30) Priority: 17.08.1987 JP 203748/87; 27.10.1987 JP 271275/87; 27.01.1988 JP 16235/88
(43) Date of publication of application: 22.02.1989
(73) Proprietor: NIPPON PETROCHEMICALS COMPANY, LIMITED, Tokyo (JP); NIPPON OIL AND FATS COMPANY, LIMITED, Chiyoda-ku Tokyo 100 (JP)
(72) Inventor: Yuichi, Orikasa, Kanagawa-ken (JP); Suehiro, Sakazume, Kanagawa-ken (JP); Sadahiro, Nishimura, Kawasaki-shi Kanagawa-ken (JP); Yoshinori, Maki, Kanagawa-ken (JP)
(74) Representative: Strehl Schübel-Hopf Groening & Partner

(56) References cited:
- EP-A- 0 206 644
- WO-A-88/04310
- US-A- 4 508 870
- PATENT ABSTRACTS OF JAPAN, vol. 11, no. 357 (C-458)[2804], 20th November 1987;& JP-A-62 129 345
- PATENT ABSTRACTS OF JAPAN, vol. 11, no. 357 (C-458)[2804], 20th November 1987;& JP-A-62 129 342
- PATENT ABSTRACTS OF JAPAN, vol. 11, no. 357 (C-458)[2804], 20th November 1987;& JP-A-62 129 343
- CHEMCIAL ABSTRACTS, vol. 107, 27th July 1987, page 8, abstract no. 23831p,Columbus, Ohio, US; N. SUZUKI et al.: "Preparations of block and graftcopolymers and their applications. III. Grafting of block copolymers havingpendant peroxide groups onto polyolefins"

## Description

### BACKGROUND OF THE INVENTION

### (1) Field of the Invention

The present invention relates to a thermoplastic resin composition having excellent impact resistance, heat resistance, chemical resistance, moldability, dimensional stability and appearance of molded articles made therefrom. This composition of the present case can be widely utilized as materials for industrial parts, electrical and electronic machine parts, automobile parts and the like.

### (2) Description of the Prior Art

Aromatic polyesters, polyphenylene ethers, polycarbonates, polyarylene sulfides are called the so-called engineering plastics. These compounds are believed to have mechanical properties, heat resistance, chemical resistance and the like, and they are used in many fields. In recent years, with regard to the engineering plastics, new additional functions are demanded, and various attempts have been made. One of them is a composition comprising a combination of plural engineering plastics, and this composition has features of the respective plastics and is known as a polymer alloy.

Known examples of such a polymer alloy include (1) an aromatic polyester and a polyphenylene ether, (2) an aromatic polyester and a polycarbonate, and (3) an aromatic polyester and a polyarylene sulfide.
(1) The aromatic polyester is excellent in moldability and chemical resistance but is poor in dimensional stability and impact strength, particularly notched impact strength inconveniently. For the purpose of solving the problem, a method has been suggested in which a polyphenylene ether is mixed with the aromatic polyester. According to a different standpoint, this mixture also intends to improve moldability and solvent resistance which are drawbacks of the polyphenylene ether. However, these two resins are difficult to disperse into each other, and thus some methods for facilitating the dispersion are disclosed. In Japanese Patent Publication No. 51-21664, Japanese Patent Unexamined Publication No. 48-56742 (U.S Patent No. 4,013,613), particularly Japanese Patent Unexamined Publication No. 62-121760 and Japanese Patent Unexamined Publication No. 62-129345, there are described examples using ethylene copolymers modified with epoxy group-containing ethylene copolymers and epoxy group-containing compounds.
   However, in the ethyelene copolymer having the epoxy group, the affinity for the aromatic polyester is good but the affinity for the polyphenylene ether is poor, and for this reason, the improvement of the impact resistance is not sufficient.
(2) When the polycarbonate is mixed with the aromatic polyester, the impact strength of the aromatic polyester can be improved, and the solvent resistance and moldability of the polycarbonate can be effectively improved. Examples in which these two resins are mixed with each other are disclosed in U.S. Patent No. 4,172,859 (Japanese Patent Unexamined Publication No. 51-144452), EP-180648 (Japanese Patent Unexamined Publication No. 60-231757), Japanese Patent Unexamined Publication No. 61-238847, Japanese Patent Unexamined Publication No. 61-252268, Japanese Patent Unexamined Publication No. 61-235456. In these examples, copolymers of glycidyl esters and α-olefins and polyfunctional glycidyl ester compounds are used to obtain compositions excellent in impact resistance, heat resistance, appearance of molded articles made therefrom, and dry heat stability.
   However, in the copolymers of glycidyl esters and α-olefins and the polyfunctional glycidyl ester compounds, the affinity for the polycarbonates is insufficient, and therefore compositions having excellent impact resistance and appearance of the molded articles cannot be obtained.
(3) A mixture of the aromatic polyester and the polyaryl sulfide can improve the heat resistance and creep resistance of the aromatic polyester and the moldability of the polyarylene sulfide. Examples of this resin mixture are disclosed in Japanese Patent Unexamined Publication Nos. 62-218441, 62-218442 and 62-218436. In all of these publications, copolymers of glycidyl esters and α-olefins are used to obtain compositions having excellent impact resistance, mechanical propeties at high temperatures, hydrolysis resistance and appearance of molded articles. However, in the copolymers of glycidyl esters and α-olefins, the affinity for the polyarylene sulfide is poor, and therefore any compositions which are excellent in impact resistance and appearance of molded articles cannot be obtained.

### SUMMARY OF THE INVENTION

The inventors of the present application have intensively researched to solve the above-mentioned problems, and as a result, they have found that when a specific multi-phase structure thermoplastic resin is additionally blended as a compatibilizing agent, a composition can be obtained in which impact resistance and appearance of molded articles are excellent, with features of selected resins kept up, and the present invention has been completed.

The present invention is directed to a thermoplastic resin composition which comprises
(I) 99 to 1 % by wt. of an aromatic polyester resin, formed from an aromatic dicarboxylic acid or a derivative thereof capable of forming the polyester and an aliphatic diol having 2 to 10 carbon atoms or a long-chain glycol having a molecular weight of 400 to 6000,
(II) 1 to 99 % by wt. of at least one kind of resin selected from the group consisting of a polyphenylene ether resin, a mixture of the polyphenylene ether resin and a styrene polymer, a polycarbonate resin, and a polyarylene sulfide resin,
(III) 0,1 to 100 parts by wt., based on 100 parts by wt. of the aforesaid resins (I) + (II), of a multi-phase structure thermoplastic resin which is formed by melting and kneading a graft polymerization precursor (A) which is obtainable by the process of first adding 5 to 400 p.b.w. of at least one monomer selected from vinyl aromatic monomers, acrylate monomers, methacrylate monomers, acrylonitrile methacrylonitrile, vinyl ester monomers, acrylamide monomers, methacrylamide monomers and monoesters and diesters of maleic anhydride and maleic acid, 0.1 to 10 p.b.w., based on 100 p.b.w. of said at least one monomer, of at least one of radical polymerizable or copolymerizable organic peroxides and a radical polymerization initiator to an aqueous suspension of 100 p.b.w. of an epoxy group-containing olefin copolymer, wherein said radical polymerizable or copolymerizable organic peroxides are represented by the following general formulae (a) and (b) 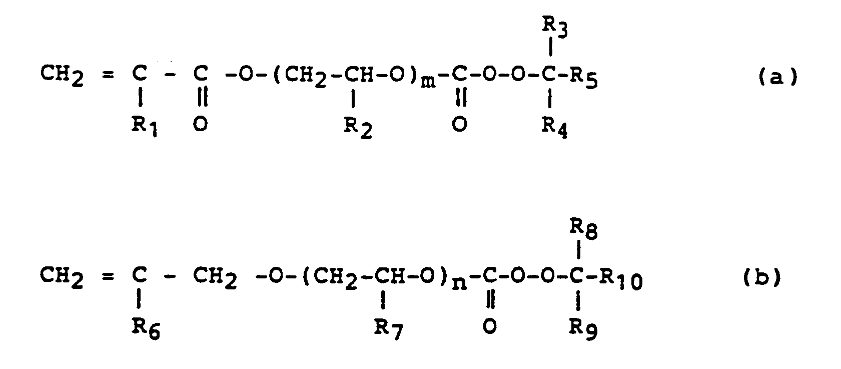 wherein R₁ is a hydrogen atom or an alkyl group having 1 or 2 carbon atoms, each of R₂ and R₇ is a hydrogen atom or a methyl group, R₆ is a hydrogen atom or an alkyl group having 1 to 4 carbon atoms, each of R₃, R₄, R₈ and R₉ is an alkyl group having 1 to 4 carbon atoms, each of R₅ and R₁₀ is an alkyl group having 1 to 12 carbon atoms, a phenyl group, an alkyl-substituted phenyl group or a cycloalkyl group having 3 to 12 carbon atoms, m is 1 or 2, and n is 0, 1 or 2,
then heating the suspension under such conditions that the decomposition of the radical polymerization initiator does not occur substantially, in order to impregnate the epoxy group-containing olefin copolymer with said at least one monomer, the radical polymerizable or copolymerizable organic peroxide and the radical polymerization initiator, and raising the temperature of this aqueous suspension, when the degree of the impregnation has reached at least 50% by weight of the original total weight of said at least one monomer, peroxide and initiator, in order to copolymerize said at least one monomer with the radical polymerizable or copolymerizable organic peroxide in the epoxy group-containing olefin copolymer wherein said copolymerisation of said at least one monomer is conducted to achieve an average polymerization degree of 5 to 10000.

### Brief Description of the photographs

Photograph No. 1 is the electron microscope photograph of a multi-phase structure thermoplastic resin prepared in Preparation Example 2 in which spherical methyl methacrylate polymer particles having a diameter of 0.1 to 0.2 µm are dispersed in a base polymer matrix comprising ethylene-glycidyl methacrylate copolymer (E-GMA). This photograph is indicated with E-GMA-g-PMMA (multi-phase structure thermoplastic resin).

Photograph No. 2 is the electron microscope photograph of a random terpolymer (Reference Example 1) of an ethylene-glycidyl methacrylate (GMA)-methyl methacrylate prepared by high-pressure radical polymerization. This photograph is indicated with E-GMA-MMA (random terpolymer).

Photograph No. 3 is the electron microscope photograph of a blend composition (Reference Example 2) which is prepared by first blending E-GMA used in Preparation Example 1 with 30% by weight of polymethyl methacrylate (PMMA) and then mixing them under melting. This photograph is indicated with E-GMA/PMMA (blend polymer).

Photograph No. 4 is the electron microscope photograph of a short-chain graft polymer prepared by reacting E-GMA copolymer used in Preparation Example 1 with methyl methacrylate in a usual grafting manner. This photograph is indicated with E-GMA-g-MMA (short-chain graft polymer).

### DETAILED DESCRIPTION OF THE INVENTION

An aromatic polyester resin used in the present invention is a polyester having an aromatic ring in a chain unit of the polymer, and in other words, it is a polymer or copolymer prepared by subjecting the main components of an aromatic dicarboxylic acid (or a derivative capable of forming the ester) and a diol (or a derivative capable of forming the ester) to condensation reaction.

Examples of the above-mentioned aromatic dicarboxylic acid include terephthalic acid, isophthalic acid, phthalic acid, 2,6-naphthalenedicarboxylic acid, 1,5-naphthalenedicarboxylic acid, bis(p-carboxyphenyl)methane, anthracenedicarboxylic acid, 4,4'-diphenyldicarboxylic acid, 4,4'-diphenyl ether dicarboxylic acid, 1,2-bis(phenoxy)ethane-4,4'-dicarboxylic acid and derivatives capable of forming the aromatic polyester.

Furthermore, the diol is an aliphatic diol having 2 to 10 carbon atoms, such as ethylene glycol, propylene glycol, 1,4-butanediol, neopentyl glycol, 1,5-pentanediol, 1,6-hexanediol, decamethylene diglycol and cyclohexanediol; and long-chain glycols each having a molecular weight of 400 to 6,000, such as polyethylene glycol, poly-1,3-propylene glycol, polytetramethylene glycol and mixtures thereof.

Typical and preferable examples of the thermoplastic aromatic polyester resin used in the present invention include polyethylene terephthalate, polypropylene terephthalate, polybutylene terephthalate, polyhexamethylene terephthalate, polyethylene-2,6-naphthalate and polyethylene-1,2-bis(phenoxy)ethane-4,4′-dicarboxylate. More preferable aromatic polyester resins are polyethylene terephthalate and polybutylene terephthalate.

The intrinsic viscosity of the thermoplastic aromatic polyester resin can be measured at 25 ± 0.1°C at a polyester concentration of 0.32 g in 100 ml of a mixture of trifluoro acetic acid and methylene chloride in a ratio of 25:75. Preferably, the intrinsic viscosity is in the range of 0.4 to 4.0 dl/g. When the intrinsic viscosity is less than 0.4 dl/g, the thermoplastic aromatic polyester resin cannot exert sufficient mechanical strength unpreferably. Inversely, when it is in excess of 4.0 dl/g, the flowability of the aromatic polyester deteriorates in melting the latter, so that luster on the surface of molded articles thereof degrades unpreferably.

The polyphenylene ether resin used in the present invention is a polymer obtained by oxidizing and polymerizing a phenolic compound represented by the general formula 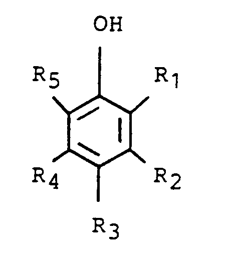
wherein each of R₁, R₂, R₃, R₄ and R₅ is selected from the group consisting of a hydrogen atom, a halogen atom, a hydrocarbon group or a substituted hydrocarbon group, and at least one of them is a hyrogen atom,
with oxygen or an oxygen-containing gas in the presence of a coupling catalyst.

Typical examples of R₁, R₂, R₃, R₄ and R₅ in the above-mentioned general formula include hydrogen, chlorine, fluorine, iodine, bromine, methyl, ethyl, propyl, butyl, chloroethyl, hydroxyethyl, phenylethyl, benzyl, hydroxymethyl, carboxyethyl, methoxycarbonylethyl, cyanoethyl, phenyl, chlorophenyl, methylphenyl, dimethylphenyl and ethylphenyl.

Typical examples of the phenolic compounds having the above-mentioned general formula include phenol, o-, m- and p-cresols, 2,6-, 2,5-, 2,4- and 3,5-dimethylphenols, 2-methyl-6-phenylphenol, 2,6-diphenylphenol, 2,6-dimethylphenol, 2-methyl-6-ethylphenol, and 2,3,5-, 2,3,6- and 2,4,6-trimethylphenols.

These phenolic compounds may be used in a combination of two or more thereof.

Other examples of the phenolic compound used in the present invention include copolymers of the phenolic compounds having the above general formula with divalent phenols such as bisphenol A, tetrabromobisphenol A, resorcin and hydroquinone.

Examples of the styrene polymer used in the present invention include homopolymers such as polystyrene, poly(α-methylstyrene) and poly(p-methylstyrene), polystyrenes modified with butadiene rubber, styrene-butadiene copolymer, ethylene-propylene copolymer and ethylene-propylene-diene copolymer, styrene-maleic anhydride copolymer, styrene-acrylonitrile copolymer, styrene-acrylonitrile-butadiene copolymer and styrene-methylmethacrylate copolymer. The styrene copolymer is used in an amount of 0 to 95% by weight with respect to the polyphenylene ether resin.

The polycarbonate resin used in the present invention include 4,4-dioxyallylalkane polycarbonates typified by a polycarbonate of 4,4-dihydroxydiphenyl-2,2-propane (generally called bisphenol A), but above all, 4,4-dihydroxydiphenyl-2,2-propane polycarbonate having a number average molecular weight of 15,000 to 80,000 is preferable. This polycarbonate may be prepared by an optional method. For example, 4,4-dihydroxydiphenyl-2,2-propane polycarbonate may be prepared by blowing phosgene in 4,4-dihydroxydiphenyl-2,2-propane as a dioxine compound in the presence of an aqueous caustic alkali solution and a solvent, or alternatively by carrying out ester interchange between 4,4-dihydroxydiphenyl-2,2-propane and diester carbonate in the presence of a catalyst.

The polyarylene sulfide resin used in the present invention is a polymer represented by the general formula

-(-Ar - S-)ₙ-

wherein examples of Ar include divalent aromatic residues each containing at least one carbon six-member ring such as 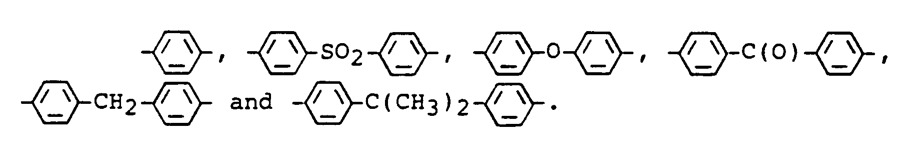
Furthermore, substituent groups such as F, Cl, Br and CH₃ may be introduced in the aromatic ring. The particularly typical one is the polyarylene sulfide (hereinafter referred to as PPS) represented by the general formula

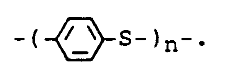

A method for preparing PPS is disclosed in Japanese Patent Publication No. 54-3368. That is, PPS may be prepared by reacting p-dichlorobenzene with sodium sulfide at a temperature of 160 to 250°C under pressure in an N-methylpyrrolidone solution.

The epoxy group-containing olefin copolymer used in the multi-phase structure thermoplastic resin regarding the present invention is a copolymer of an olefin and an unsaturated glycidyl group-containing monomer, or a terpolymer of an olefin, an unsaturated glycidyl group-containing monomer and another unsaturated monomer, or a multicomponent copolymer. The particularly preferable olefin of the copolymer is ethylene, and the preferable copolymer comprises 60 to 99.5% by weight of ethylene, 0.5 to 40% by weight of the glycidyl group-containing monomer and 0 to 39.5% by weight of another unsaturated monomer.

Examples of the unsaturated glycidyl group-containing monomer include glycidyl acrylate, glycidyl methacrylate, itaconic acid monoglycidyl ester, butenetricarboxylic acid monoglycidyl ester, butenetricarboxylic acid diglycidyl ester, butenetricarboxylic acid triglycidyl ester, vinyl glycidyl ethers and glycidyl esters of maleic acid, crotonic acid and fumaric acid, allyl glycidyl ether, glycidyloxy ethylvinyl ether, glycidyl ethers such as styrene p-glycidyl ether, and p-glycidyl styrene. The particularly preferable ones are glycidyl methacrylate and allyl glycidyl ether.

Other examples of the unsaturated monomers include olefins, vinyl esters, α,β-ethylenic unsaturated carboxylic acids and their derivatives. Typical examples of such unsaturated monomers include olefins such as propylene, butene-1, hexene-1, decene-1, octene-1 and styrene, vinyl esters such as vinyl acetate, vinyl propionate and vinyl benzoate, acrylic acid, methacrylic acid, esters such as methyl, ethyl, propyl, butyl, 2-ethylhexyl, cyclohexyl, dodecyl and octadecyl acrylates and methacrylates, maleic acid, maleic anhydride, itaconic acid, fumaric acid, maleic monoesters and diesters, vinyl ethers such as vinyl chloride, vinyl methyl ether and viny ethyl ether, and acrylic amide compounds. Particularly, acrylic and methacrylic esters are preferable.

Typical examples of the epoxy group-containing olefin copolymer include ethylene-glycidyl methacrylate copolymer; ethylene-vinyl acetate-glycidyl methacrylate copolymer; ethylene-ethyl acrylate-glycidyl methacrylate copolymer; ethylene-carbon monoxide-glycidyl methacrylate copolymer; ethylene-glycidyl acrylate copolymer; and ethylene-vinyl acetate-glycidyl acrylate copolymer. Above all, ethylene-glycidyl methacrylate copolymer, ethylene-ethyl acrylate-glycidyl methacrylate copolymer and ethylene-vinyl acetate-glycidyl methacrylate copolymer are preferred.

These epoxy group-containing olefin copolymers can be used in a mixture thereof.

The above-mentioned epoxy group-containing olefin copolymer may be prepared preferably by a high-pressure radical polymerization. That is, the epoxy group-containing olefin copolymer may be prepared by simultaneously or stepwise contacting and polymerizing a monomer mixture of 60 to 99.5% by weight of the above-mentioned ethylene, 0.5 to 40% by weight of one or more unsaturated glycidyl group-containing monomer, and 0 to 39.5% by weight of at least one other unsaturated monomer in the presence of 0.0001 to 1% by weight of a radical polymerization initiator based on the total weight of all the monomers at a polymerization pressure of 500 to 4,000 kg/cm², preferably 1,000 to 3,500 kg/cm², at a reation temperature of 50 to 400°C, preferably 100 to 350°C, using a chain transfer agent and, if necessary, some auxiliaries in an autoclave or tubular reactor.

Examples of the above-mentioned radical polymerization initiator include usual initiators such as peroxides, hydroperoxides, azo-compounds, amine oxide compounds and oxygen.

Examples of the chain transfer agent include hydrogen, propylene, butene-1, saturated aliphatic hydrocarbons having 1 to 20 carbon atoms such as methane, ethane, propane, butane, isobutane, n-hexane, n-heptane and cycloparaffins; halogen-substituted hydrocarbons such as chloroform and carbon tetrachloride; saturated aliphatic alcohols such as methanol, ethanol, propanol and isopropanol; saturated aliphatic carbonyl compounds having 1 to 20 or more carbon atoms such as carbon dioxide, acetone and methyl ethyl ketone; and aromatic compounds such as toluene, diethylbenzene and xylene.

Other examples of the epoxy group-containing olefin copolymer used in the present invention include modified compounds prepared by the addition reaction between the above-mentioned unsaturated glycidyl group-containing monomers and conventional olefin homopolymers and copolymers.

Examples of the above-mentioned olefin homopolymer include low-density, medium-density and high-density polyethylenes, polypropylene, polybutene-1 and poly-4-methylpentene-1, and examples of the above-mentioned copolymers include ethylene-propylene copolymer; ethylene-butene-1 copolymer; ethylene-hexene-1 copolymer; ethylene-4-methylpentene-1 copolymer; copolymers with other α-olefins mainly comprising ethylene such as ethylene-octene-1 copolymer; copolymers with other α-olefins mainly comprising propylene such as propylene-ethylene block copolymer; ethylene-vinyl acetate copolymer; ethylene-acrylic acid copolymer; ethylene-methacrylic acid copolymer; copolymers of ethylene and methyl, ethyl, propyl, isopropyl and butyl acrylate and methacrylate; ethylene-maleic acid copolymer; ethylene-propylene copolymer rubber; ethylene-propylenediene-copolymer rubber; liquid polybutadiene; etylene-vinyl acetate-vinyl chloride copolymer; and mixtures thereof.

Typical examples of the at least one monomer to be incorporated in the multi-phase structure thermoplastic resin used in the present invention include monomers such as vinyl aromatic monomers, for example, styrene, nucleus-substituted styrenes such as methylstyrene, dimethylstyrene, ethylstyrene, isopropylstyrene and chlorostyrene, and α-substituted styrene such as α-methylstyrene and α-ethylstyrene; acrylate and methacrylate monomers, for example, alkyl esters having 1 to 7 carbon atoms of acrylic acid or methacrylic acid such as methyl, ethyl, propyl, isopropyl and butyl acrylate and methacrylate; acrylonitrile and methacrylonitrile monomers; vinyl ester monomers such as vinyl acetate and vinyl propionate; acrylamide and methacrylamide monomers; and monoesters and diesters of maleic anhydride and maleic acid. Above all, vinyl aromatic monomers, acrylonitrile and methacrylonitrile monomers and vinyl ester monomers are particularly preferable.

The multi-phase structure thermoplastic resin used in the present invention is a matrix of the epoxy group-containing olefin copolymer or of said copolymerisation product of said at least one monomer as defined in claim 1 in which another copolymerisation product as defined above, or epoxy group-containing olefin copolymer is uniformly dispersed in the spherical form.

The polymer dispersed in the matrix has a particle diameter of 0.001 to 10 µm, preferably 0.01 to 5 µm. When the particle diameter of the dispersed polymer is less than 0.001 µm or is more than 10 µm, compatibility to the resin is bad, with the result that, for example, the appearance of articles made therefrom deteriorates or the improvement effect of impact resistance is unpreferably insufficient.

Said copolymerization product of said at least one monomer in the multi-phase thermoplastic resin used in the present invention has a number average polymerization degree of 5 to 10,000, preferably 10 to 5,000.

When the number average polymerization degree is less than 5, impact resistance can not be improved, and inversely, when it is in excess of 10,000, melting viscosity is high, moldability deteriorates, and surface luster falls off unpreferably.

It is important that the contents of the epoxy group-containing olefin copolymer and the at least one monomer are in the range as defined in claim 1 for the preparation of the graft polymerization precursor in order to obtain the multi-phase structure thermoplastic resin (III).

When the content of the epoxy group-containing olefin copolymer is less than as defined in claim 1, the improvement effect of impact resistance is poor, and inversely when it is in excess thereof, heat resistance is impaired unpreferably, though the impact resistance is sufficiently improved.

As a grafting technique used to prepare the multi-phase structure thermoplastic resin regarding the present invention, there may be employed a well known process such as a chain transfer process and an ionizing radiation process, but the following process is most preferable, because grafting efficiency is high, secondary cohesion due to heat does not occur, and therefore performance can be exerted effectively.

Now, a method for preparing the thermoplastic resin composition of the present invention will be described in detail.

That is, water is suspended in 100 parts by weight of an epoxy group-containing olefin copolymer. Afterward, 5 to 400 parts by weight of at least one of the monomer as referred to in claim 1 is added to the suspension, and in the mixture, a solution is poured in which there are dissolved 0.1 to 10 parts by weight, based on 100 parts by weight of the monomer, of one or a mixture of radical polymerizable or copolymerizable organic peroxides represented by the undermentioned general formula (a) or (b) and 0.01 to 5 parts by weight, based on 100 parts by weight of the total of the monomer and the radical polymerizable or copolymerizable organic peroxide, of a radical polymerization initiator having a decomposition temperature to obtain a half-life period of 10 hours of from 40 to 90°C. The mixture is then heated under conditions that the decomposition of the radical polymerization initiator does not occur substantially, in order to impregnate the ethylene copolymer with said monomer, the radical polymerizable or copolymerizable organic peroxide and the radical polymerization initiator. When the impregnation ratio has reached 50% by weight or more of the original total weight of the monomer, peroxide and initiator, the temperature of this aqueous suspension is raised to copolymerize said monomer with the radical polymerizable or copolymerizable organic peroxide in the ethylene copolymer, thereby obtaining a graft polymerization precursor (A).

This graft polymerization precursor (A) also is the multi-phase structure thermoplastic resin. Therefore, the thus obtained graft polymerization precursor (A) may be directly melted and mixed with an aromatic polyester resin as defined in claim 1 and at least one resin selected from the group consisting of a polyphenylene ether resin, a mixture of the polyphenylene ether resin and a styrene polymer, a polycarbonate resin and a polyarylene sulfide.

Furthermore, the multi-phase thermoplastic resin (III) of the present invention can be obtained by kneading the graft polymerization precursor (A) under melting at 100 to 300°C.

The above-mentioned radical polymerizable or copolymerizable organic peroxides are compounds represented by the general formulae (a) and (b): 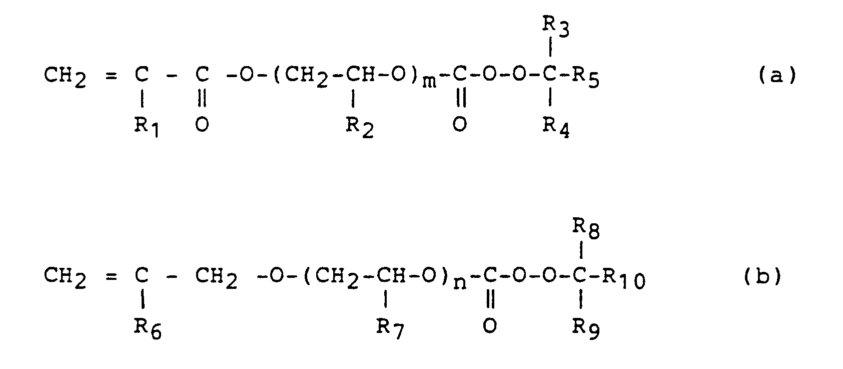
wherein R₁ is a hydrogen atom or an alkyl group having 1 or 2 carbon atoms, each of R₂ and R₇ is a hydrogen atom or a methyl group, R₆ is a hydrogen atom or an alkyl group having 1 to 4 carbon atoms, each of R₃, R₄, R₈ and R₉ is an alkyl group having 1 to 4 carbon atoms, each of R₅ and R₁₀ is an alkyl group having 1 to 12 carbon atoms, a phenyl group, an alkyl-substituted phenyl group or a cycloalkyl group having 3 to 12 carbon atoms, m is 1 or 2, and n is 0, 1 or 2.

Typical examples of the radical polymerizable or copolymerizable organic peroxides represented by the general formula (a) include t-butylperoxyacryloyloxyethyl carbonate, t-amylperoxyacryloyloxyethyl carbonate, t-hexylperoxyacryloyloxyethyl carbonate, 1,1,3,3-tetramethylbutylperoxyacryloyloxyethyl carbonate, cumylperoxyacryloyloxyethyl carbonate, p-isopropylperoxyacryloyloxyethyl carbonate, t-butylperoxymethacryloyloxyethyl carbonate, t-amylperoxymethacryloyloxyethyl carbonate, 1,1,3,3-tetramethylbutylperoxymethacryloyloxyethyl carbonate, cumylperoxymethacryloyloxyethyl carbonate, p-isopropylperoxymethacryloyloxyethyl carbonate, t-butylperoxyacryloyloxyethoxyethyl carbonate, t-amylperoxyacryloyloxyethoxyethyl carbonate, t-hexylperoxyacryloyloxyethoxyethyl carbonate, 1,1,3,3-tetramethylbutylperoxyacryloyloxyethoxyethyl carbonate, cumylperoxyacryloyloxyethoxyethyl carbonate, p-isopropylperoxyacryloyloxyethoxyethyl carbonate, t-butylperoxymethacryloyloxyethoxyethyl carbonate, t-amylperoxymethacryloyloxyethoxyethyl carbonate, t-hexylperoxymethacryloyloxyethoxyethyl carbonate, 1,1,3,3-tetramethylbutylperoxymethacryloyloxyethoxyethyl carbonate, cumylperoxymethacryloyloxyethoxyethyl carbonate, p-isopropylperoxymethacryloyl oxyethoxyethyl carbonate, t-butylperoxyacryloyloxyisopropyl carbonate, t-amylperoxymacryloyloxyisopropyl carbonate, t-hexylperoxyacryloyloxyisopropyl carbonate, 1,1,3,3-tetramethylbutylperoxyacryloyloxyisopropyl carbonate, cumylperoxyacryloyloxyisopropyl carbonate, p-isopropylperoxyacryloyloxyisopropyl carbonate, t-butylperoxymethacryloyloxyisopropyl carbonate, t-amylperoxymethacryloyloxyisopropyl carbonate, t-hexylperoxymethacryloyloxyisopropyl carbonate, 1,1,3,3-tetramethylbutylperoxymethacryloyloxyisopropyl carbonate, cumylperoxymethacryloyloxyisopropyl carbonate, p-isopropylperoxymethacryloyloxyisopropyl carbonate.

Typical examples of the compounds represented by the general formula (b) include t-butylperoxyallyl carbonate, t-amylperoxyallyl carbonate, t-hexylperoxyallyl carbonate, 1,1,3,3-tetramethylbutylperoxyallyl carbonate, p-menthaneperoxyallyl carbonate, cumylperoxyallyl carbonate, t-butylperoxymethallyl carbonate, t-amylperoxymethallyl carbonate, t-hexylperoxymethallyl carbonate, 1,1,3,3-tetramethylbutylperoxymethallyl carbonate, p-menthaneperoxymethallyl carbonate, cumylperoxymethallyl carbonate, t-butylperoxyallyloxyethyl carbonate, t-amylperoxyallyloxyethyl carbonate, t-butylperoxymethallyloxyethyl carbonate, t-amylperoxymethallyloxyethyl carbonate, t-hexylperoxymethallyloxyethyl carbonate, t-butylperoxyallyloxyisopropyl carbonate, t-amylperoxyallyloxyisopropyl carbonate, t-hexylperoxyallyloxyisopropyl carbonate, t-butylperoxymethallyloxyisopropyl carbonate, t-hexylperoxymethallyloxyisopropyl carbonate.

Of these compounds, preferable ones are t-butylperoxyacryloyloxyethyl carbonate, t-butylperoxymethacryloyloxyethyl carbonate, t-butylperoxyallyl carbonate and t-butylperoxymethallyl carbonate.

In the present invention, amounts of the above-mentioned resins (I) and (II) depend upon a purpose of the composition of the present invetnion.

That is, when it is aimed that features of the aromatic polyester resin are retained and poor dimensional stability and notched impact strength which are drawbacks of the resin are improved, there is required 50 to 99% by weight, preferably 60 to 95% by weight, of the aromatic polyester resin.

When the aromatic polyester resin is less than 50% by weight, excellent moldability and chemical resistance which are features of the aromatic polyester resin are impaired, and when it is in excess of 99% by weight, the dimensional stability which is one of the purposes of the present invention is not improved sufficiently.

If it is aimed that the features of the polyphenylene ether are retained and the poor moldability and chemical resistance which are drawbacks of the ether are improved, there is required 50 to 99% by weight, preferably 60 to 95% by weight, of the polyphenylene ether.

When the amount of the polyphenylene ether is less than 50% by weight, heat resistance and dimensional stability of the polyphenylene ether are impaired, and when it is in excess of 99% by weight, the improvement effect of moldability and chemical resistance which is one of the purposes of the present invention is not obtained.

If it is aimed that chemical resistance and moldability are improved retaining the feature of the polycarbonate, there is required 50 to 99% by weight, preferably 60 to 95% by weight, of the polycarbonate.

When the amount of the polycarbonate is less than 50% by weight, excellent impact resistance which is the feature of the polycarbonate is impaired, and when it is in excess of 99% by weight, the improvement effect of chemical resistance and moldability which is one of the purposes of the present invention is not obtained.

If it is aimed that moldability is improved retaining the feature of the polyarylene sulfide, there is required 50 to 99% by weight, preferably 60 to 95% by weight, of the polyarylene sulfide.

When the amount of the polyarylene sulfide is less than 50% by weight, excellent heat resistance and creep resistance which are features of the polyarylene sulfide are impaired, and when it is in excess of 99% by weight, the improvement effect of moldability which is one of the purposes of the present invention is not expected.

In the present invention, the multi-phase structure thermoplastic resin is used in an amount of 0.1 to 100 parts by weight, preferably 1 to 50 parts by weight, based on 100 parts by weight of the total weight of the resins (I) + (II).

When the amount of the multi-phase structure thermoplastic resin is less than 0.1 part by weight, any compatibility effect is not present, impact strength deteriorates, and layer peeling occurs on molded articles, with the result that the appearance of the articles is degraded. When it is in excess of 100 parts by weight, stiffness and heat resistance of the composition of the present invention deteriorate unpreferably.

In the present invention, the inorganic filler (IV) can be used in an amount of 1 to 150 parts by weight based on 100 parts of the components (I) + (II) + (III).

The inorganic filler may be used in granular, lamellar, scaly, needle, spherical, balloons and fibrous forms, and examples of these inorganic fillers include granular fillers such as calcium sulfate, calcium silicate, clay, diatomaceous earth, talc, alumina, siliceous sand, glass powder, iron oxide, metallic powder, graphite, silicon carbide, silicon nitride, silica, boron nitride, aluminum nitride and carbon black; lamellar and scaly fillers such as mica, glass plate, sericite, pyrophyllite, metallic foil, for example, aluminum flake, and graphite; balloon fillers such as Shirasu balloon, metallic balloon, glass balloon and pumice; and mineral fibers such as glass fiber, carbon fiber, graphite fiber, whisker, metallic fiber, silicon carbide fiber, asbestos and wollastonite.

When the content of the filler is in excess of 150 parts by weight, the impact strength of molded articles deteriorates unpreferably. Inversely, when it is less than 1 part by weight, any modification effect cannot be exerted.

The surface of the inorganic filler is preferably treated by the use of stearic acid, oleic acid, palmitic acid or a metallic salt thereof, paraffin wax, polyethylene wax or a modified material thereof, an organic silane, an organic borane or an organic titanate.

The thermoplastic composition of the present invention may be manufactured by melting and mixing the above-mentioned components (I) + (II) + (III) at a temperature of 230 to 350°C.

The components (I), (II) and (III) may be mixed simultaneously, but it is preferred that after one of the components (I) and (II) and the component (III) are first melted and mixed, the other of the components (I) and (II) is then mixed with the resulting mixture. Particularly in the case of the resin which will be in the state of a disperse phase, it is suitable that such a resin is uniformly and finely mixed.

In melting and mixing, there may be used a usual kneader such as a mixing roll mill, a Banbury's mixer, a kneader mixer, a kneading extruder, a biaxial extruder and rolls.

In the present invention, various additives can be used, in so far as they do not deviate from the gist of the present invention. Examples of such usable additives include another thermoplastic resin such as polyolefin resin, polyvinyl chloride resin, polyvinylidene chloride resin, fluorine-contained resin, polyoxymethylene resin, polyamide resin or polysulfone resin, a natural rubber, a synthetic rubber, a flame retardant a flame retardant auxiliary of an antimony compound such as antimony trioxide, antimony pentaoxide, antimony trichloride, antimony trisulfide, antimony pentasulfide, sodium antimonate, antimony tartrate or metallic antimony, an antioxidant, an ultraviolet inhibitor, a lubricant, a dispersant, a foaming agent, a crosslinking agent, and a colorant.

Now, the present invention will be described in detail in reference to examples.

### Preparation Example 1 (Preparation of the Multi-phase Structure Thermoplastic Resin IIIa)

In a 5-liter stainless steel autoclave was placed 2,500 g of pure water, and 2.5 g of polyvinyl alcohol was dissolved therein as a suspending agent. In the solution was placed 700 g of ethylene-glycidyl methacrylate copolymer as an epoxy group-containing olefin copolymer (content of glycidyl methacrylate = 15% by weight) (trade name Rexpearl J-3700; made by Nippon Petrochemicals Co., Ltd.), followed by stirring to suspend the copolymer therein in a nitrogen atmosphere. Separately, in 300 g of styrene as the monomer were dissolved 1.5 g of benzoylperoxide as a radical polymerization initiator (trade name Nyper-B; made by Nippon Oils & Fats Co., Ltd.) and 6 g of t-butylperoxymethacryloyloxyethyl carbonate as a radical polymerizable or copolymerizable organic peroxide, and the resulting solution was then placed in the above-mentioned autoclave, followed by stirring.

Afterward, the autoclave was heated up to a temperature of 60 to 65°C, and stirring was then continued for 2 hours, so that the epoxy group-containing olefin copolymer was impregnated with the monomer containing the radical polymerization initiator and the radical polymerizable or copolymerizable organic peroxide. After it had been confirmed that the total amount of the impregnated monomer, radical polymerizable or copolymerizable organic peroxide and radical polymerization initiator was 50% by weight or more of the original total weight thereof, the temperature of the mixture was raised up to a level of 80 to 85°C, and this temperature was then maintained for 7 hours to complete polymerization, followed by water washing and drying, thereby obtaining a graft polymerization precursor IIIa'. The styrene polymer was extracted from this graft polymerization precursor with ethyl acetate, and according to measurement by the use of GPC, the number average polymerization degree of the styrene polymer was 900.

Next, this graft polymerization precursor was extruded at 200°C by a plastomill monoaxial extruder (Toyo Seiki Seisaku-sho Ltd.) to perform graft reaction, whereby a multi-phase structure thermoplastic resin IIIa.

This multi-phase structure thermoplastic resin was then observed by a scanning type electron microscope (trade name JEOL JSM T300; made by JEOL, Ltd.), and it was found that it was a multi-phase structure thermoplastic resin in which spherical resin particles each having a diameter of 0.3 to 0.4 µm were uniformly dispersed. In this case, the grafting efficiency of the styrene polymer was 49.0% by weight.

### Preparation Example 2 (Preparation of the Multi-phase Structure Thermoplastic Resin IIIb)

The same procedure as in Preparation Example 1 was repeated with the exception that 300 g of styrene as the monomer were replaced by 300 g of a methyl methacrylate monomer and 0.6 g of n-dodecylmercaptan as a molecular weight modifier was used, thereby preparing the multi-phase structure thermoplastic resin IIIb via a graft polymerization precursor IIIb' (number average polymerization degree of methyl methacrylate polymer = 700). The average diameter of the resin particles dispersed in this resin composition was from 0.1 to 0.2 µm, as seen in Photograph No. 1 (E-GMA-g-PMMA).

### Reference Example 1 (Preparation of a Random Copolymer)

In a 3.8-liter reactor equipped with a stirrer were placed a mixture of 1,600 g of ethylene, 32 g of glycidyl methacrylate and 40 g of methyl methacrylate, and in the presence of 200 g of n-hexane as a chain transfer agent and 0.0012% by weight of a radical polymerization initiator (di-tert-butyl peroxide) based on the total weight of the mixture, reaction was then performed at a polymerization pressure of 1,600 kg/cm² at a reaction temperature of 170°C, thereby obtaining an ethylene-glycidyl methacrylate-methyl methacrylate random terpolymer. Photograph No. 2 (E-GMA-MMA) shows the observational result of the random terpolymer by the use of an electron microscope.

The results indicate that the random copolymer does not have such a multi-phase structure as in the present invention.

### Reference Example 2 (Preparation of a Blend)

The epoxy group-containing ethylene copolymer used in Preparation Example 1 was blended with 30% by weight of polymethyl methacrylate (trade name Acrypet MD; made by Mitsubushi Rayon Co., Ltd.), and they were mixed at 250°C under melting. The blend was observed through an electron microscope, and the results are shown in Photograph No. 3 (E-GMA/PMMA).

In the blend, the particle size of the dispersed polymethyl methacrylate is large, and therefore the structure of the polymer is noticeably different from the multi-phase structure of the present invention.

### Reference Example 3

In a high-speed shear mixer, 950 g of ethylene-glycidyl methacrylate copolymer used in Preparation Example 1 were mixed, at ordinary temperature for 5 minutes, with a solution in which 0.5 g of dicumyl peroxide (trade name Percumyl D; made by Nippon Oils & Fats Co., Ltd.) was dissolved in 50 g of methyl methacrylate. The mixture was then extruded at 200°C by an extruder, and graft reaction was performed in a usual grafting manner in order to obtain a short-chain graft polymer. The structure of the thus obtained graft polymer can be observed from the electron microscope photograph of Photograph No. 4 (E-GMA-g-MMA).

The results in the photograph indicate that the above-mentioned short-chain graft polymer does not have such a multi-phase structure as seen in the polymer prepared in Preparation Example 1, but a single-phase structure.

### Examples 1 to 11

Polybutylene terephthalate (which was denoted by PBT in tables) having an intrinsic viscosity of 3.5 dl/g, poly-2,6-dimethyl-1,4-phenylene ether (which was denoted by PPE in tables), modified PPE (trade name Nolyl 534J; made by Engineering Plastics Co., Ltd.) and the multi-phase structure thermoplastic resin IIIa obtained in Preparation Example 1 were melted and blended together in ratios shown in Table 1.

In melting and mixing the materials, they were fed to a one-direction rotating diaxial extruder having a screw diameter of 30 mm a temperature of which was set to 250°C. Afterward, the mixture was extruded and then formed into grains.

Next, specimens were prepared therefrom by an injection molding machine having cylinder and mold temperatures were 260°C and 80°C, respectively. Sizes of the specimens were as follows:

| | |
|---|---|
| Specimens for notched izod impact strength | 13 x 65 x 6 mm |
| Specimens for heat distortion temperature | 13 x 128 x 6 mm |
| Specimens for tensile test | 13 x 220 x 6 mm |

Test procedures were as follows:

| | |
|---|---|
| (1) Notched izod impact strength | JIS K7110 |
| (2) Heat distortion temperature (18.6 kg/cm²) | JIS K7207 |
| (3) Elongation at break | JIS k7113 |

**Table 1-1**

| Example | 1 | 2 | 3 | 4 | 5 |
|---|---|---|---|---|---|
| PBT (wt%) | 80 | 80 | 80 | 60 | 60 |
| PPE (wt%) | 20 | 20 | 20 | 40 | 40 |
| Multi-phase Structure Thermoplastic Resin IIIa* | 3 | 5 | 10 | 3 | 5 |
| Notched Izod Impact Strength (kg·cm/cm) | 9 | 15 | 17 | 10 | 20 |
| Heat Distortion Temperature (°C) (18.6 kg/cm²) | 89 | 88 | 86 | 112 | 109 |
| Elongation at Break (%) | 85 | 100 | 130 | 80 | 110 |

| | | | | | |
|---|---|---|---|---|---|
| * Parts by weight based on 100 parts by weight of PBT + PPE. | | | | | |

**Table 1-2**

| Example | 6 | 7 | 8 | 9 | 10 | 11 |
|---|---|---|---|---|---|---|
| PBT (wt%) | 60 | 50 | 50 | 40 | 60 | 40 |
| PPE (wt%) | 40 | 50 | 50 | 60 | - | - |
| Modified PPE (wt%) | - | - | - | - | 40 | 60 |
| Multi-phase Structure Thermoplastic Resin IIIa* | 10 | 3 | 5 | 5 | 10 | 5 |
| Notched Izod Impact Strength (kg·cm/cm) | 25 | 13 | 15 | 14 | 27 | 17 |
| Heat Distortion Temperature (°C) (18.6 kg/cm²) | 107 | 122 | 121 | 124 | 101 | 118 |
| Elongation at Break (%) | 125 | 90 | 105 | 95 | 108 | 100 |

| | | | | | | |
|---|---|---|---|---|---|---|
| * Parts by weight based on 100 parts by weight of PBT + PPE. | | | | | | |

### Examples 12 to 16

The same evaluation as in Example 1 was made using the graft polymerization precursor (IIIa′) obtained in Preparation Example 1. The results are set forth in Table 2.

**Table 2**

| Example | 12 | 13 | 14 | 15 | 16 |
|---|---|---|---|---|---|
| PBT (wt%) | 60 | 60 | 50 | 60 | 50 |
| PPE (wt%) | 40 | 40 | 50 | - | - |
| Modified PPE (wt%) | - | - | - | 40 | 50 |
| Graft Polymerization Precursor (IIIa′)* | 3 | 5 | 10 | 5 | 10 |
| Notched Izod Impact Strength (kg·cm/cm) | 9 | 15 | 17 | 13 | 20 |
| Heat Distortion Temperature (°C) (18.6 kg/cm²) | 89 | 88 | 86 | 93 | 90 |
| Elongation at Break (%) | 85 | 100 | 130 | 106 | 133 |

| | | | | | |
|---|---|---|---|---|---|
| * Parts by weight based on 100 parts by weight of PBT + PPE. | | | | | |

### Examples 17 to 21

The same procedure as in the above examples was repeated with the exception that a glass fiber having an average fiber length of 5.0 mm and a diameter of 10 µm was additionally blended. The results are set forth in Table 3.

**Table 3**

| Example | 17 | 18 | 19 | 20 | 21 |
|---|---|---|---|---|---|
| PBT (wt%) | 80 | 60 | 60 | 50 | 60 |
| PPE (wt%) | 20 | 40 | 40 | 50 | - |
| Modified PPE (wt%) | - | - | - | - | 40 |
| Multi-phase Structure Thermoplastic Resin IIIa* | 10 | 5 | - | 5 | 5 |
| Graft Polymerization Precursor (IIIa′)* | - | - | 5 | - | - |
| Glass Fiber (wt%)* | 30 | 30 | 30 | 30 | 30 |
| Notched Izod Impact Strength (kg·cm/cm) | 18 | 19 | 16 | 14 | 13 |
| Heat Distortion Temperature (°C) (18.6 kg/cm²) | 136 | 146 | 139 | 152 | 135 |
| Elongation at Break (%) | 85 | 100 | 130 | 106 | 133 |

| | | | | | |
|---|---|---|---|---|---|
| * Parts by weight based on 100 parts by weight of PBT + PPE. | | | | | |

### Comparative Example 1 to 6

The same procedure as in Example 1 was repeated with the exception that the multi-phase structure thermoplastic resins in Example 1 were replaced by the ethylene-glycidyl methacrylate copolymer used in Preparation Example 1, the blend obtained in Reference Example 2 and the short-chain graft polymer obtained in Reference Example 3. The results are set forth in Table 4.

**Table 4**

| Comp. Example | 1 | 2 | 3 | 4 | 5 | 6 |
|---|---|---|---|---|---|---|
| PBT (wt%) | 80 | 60 | 60 | 50 | 60 | 60 |
| PPE (wt%) | 20 | 40 | 40 | 50 | 40 | 40 |
| Ethylene-Glycidyl Methacrylate Copolymer* | 5 | 5 | 10 | 10 | - | - |
| Blend* | - | - | - | - | 10 | - |
| Short-Chain Graft Polymer* | - | - | - | - | - | 10 |
| Notched Izod Impact Strength (kg·cm/cm) | 7 | 10 | 13 | 8 | 3 | 17 |
| Heat Distortion Temperature (°C) (18.6 kg/cm²) | 86 | 103 | 93 | 118 | 88 | 115 |
| Elongation at Break (%) | 90 | 100 | 115 | 90 | 30 | 113 |

| | | | | | | |
|---|---|---|---|---|---|---|
| * Parts by weight based on 100 parts by weight of PBT + PPE. | | | | | | |

### Examples 22 to 29

Polycarbonate resin having a number average molecular weight of 62,000, polybutylene terephthalate (which was denoted by PBT in tables) having an intrinsic viscosity of 3.5 dl/g, and the multi-phase structure thermoplastic resins IIIa and IIIb obtained in Preparation Examples 1 and 2 were melted and mixed with one another in ratios shown in Table 5.

The above-mentioned melting and mixing operations as well as the formation of specimens were carried out in the same manners as in Example 1.

Chemical resistance was evaluated by observing the appearance of the specimens after the immersion thereof at 75°C for 30 days in methanol. The evaluation was ranked as follows:
- O: Not changed after the immersion in methanol.
- Δ: Occurrence of cracks on the specimen and partial dissolution thereof.
- X: Noticeable dissolution of the specimen.

**Table 5**

| Example | 22 | 23 | 24 | 25 | 26 | 27 | 28 | 29 |
|---|---|---|---|---|---|---|---|---|
| PBT (wt%) | 20 | 20 | 20 | 40 | 40 | 50 | 70 | 70 |
| Polycarbonate (wt%) | 80 | 80 | 80 | 60 | 60 | 50 | 30 | 30 |
| Multi-Phase Structure Themoplastic Resin IIIa* | 10 | 20 | - | 20 | - | 20 | - | 20 |
| Multi-Phase Structure Themoplastic Resin IIIb* | - | - | 20 | - | 20 | - | 20 | - |
| Notched Izot Impact Strength (kg·cm/cm) | 90 | 95 | 85 | 85 | 80 | 79 | 70 | 75 |
| Heat Distortion Temperature (°C) (18.6 kg/cm²) | 110 | 103 | 100 | 93 | 97 | 90 | 95 | 89 |
| Chemical Resistance (appearance) | O | O | O | O | O | O | O | O |

| | | | | | | | | |
|---|---|---|---|---|---|---|---|---|
| * Parts by weight based on 100 parts by weight of PBT + polycarbonate. | | | | | | | | |

### Examples 30 to 35

The same procedure as in the above-mentioned examples was repeated with the exception that the graft polymerization multi-phase structure thermoplastic resins IIIa and IIIb were replaced by the graft precursors IIIa' and IIIb' obtained in Preparation Examples 1 and 2. The results are set forth in Table 6. In the cases of using the graft precursors, functional effects are the same as in the cases of using the graft polymerization multi-phase structure thermoplastic resins.

**Table 6**

| Example | 30 | 31 | 32 | 33 | 34 | 35 |
|---|---|---|---|---|---|---|
| PBT (wt%) | 20 | 20 | 50 | 50 | 70 | 70 |
| Polycarbonate (wt%) | 80 | 80 | 50 | 50 | 30 | 30 |
| Graft Polymerization Precursor IIIa′* | 20 | - | 20 | - | 20 | - |
| Graft Polymerization Precursor IIIb′* | - | 20 | - | 20 | - | 20 |
| Notched Izod Impact Strength (kg·cm/cm) | 95 | 89 | 80 | 77 | 73 | 68 |
| Heat Distortion Temperature (°C) (18.6 kg/cm²) | 107 | 100 | 86 | 96 | 90 | 92 |
| Chemical Resistance (appearance) | O | O | O | O | O | O |

| | | | | | | |
|---|---|---|---|---|---|---|
| * Parts by weight based on 100 parts by weight of PBT + polycarbonate. | | | | | | |

### Examples 36 o 41

The same procedure as in the above examples was repeated with the exception that a glass fiber having an average fiber length of 5.0 mm and a diameter of 10 µm was additionally blended. The results are set forth in Table 7.

**Table 7**

| Example | 36 | 37 | 38 | 39 | 40 | 41 |
|---|---|---|---|---|---|---|
| PBT (wt%) | 20 | 20 | 40 | 40 | 70 | 70 |
| Polycarbonate (wt%) | 80 | 80 | 60 | 60 | 30 | 30 |
| Multi-Phase Structure Thermoplastic Resin IIIa* | 20 | - | 20 | - | - | - |
| Multi-Phase Structure Thermoplastic Resin IIIb* | - | 20 | - | - | - | - |
| Graft Polymerization Precursor IIIa'* | - | - | - | 20 | 20 | - |
| Graft Polymerization Precursor IIIb'* | - | - | - | - | - | 20 |
| Glass Fiber* | 30 | 30 | 30 | 30 | 30 | 30 |
| Notched Izod Impact Strength (kg·cm/cm) | 90 | 88 | 80 | 78 | 80 | 78 |
| Heat Distortion Temperature (°C) (18.6 kg/cm²) | 128 | 125 | 106 | 110 | 103 | 107 |

| | | | | | | |
|---|---|---|---|---|---|---|
| * Parts by weight based on 100 parts by weight of PBT + polycarbonate. | | | | | | |

### Comparative Examples 7 to 14

The same procedure as in Example 1 was repeated with the exception that the multi-phase structure thermoplastic resin in Example 20 was replaced by the ethylene-glycidyl methacrylate copolymer used in Preparation Example 1, the blend obtained in Reference Example 2 and the short-chain graft polymer obtained in Reference Example 3. The results are set forth in Table 8.

**Table 8**

| Comp. Example | 7 | 8 | 9 | 10 | 11 | 12 | 13 | 14 |
|---|---|---|---|---|---|---|---|---|
| PBT (wt%) | 20 | 20 | 20 | 50 | 70 | 70 | 70 | 70 |
| Polycarbonate (wt%) | 80 | 80 | 80 | 50 | 30 | 30 | 30 | 30 |
| Ethylene-Glycidyl Methacrylate Copolymer* | - | 10 | 20 | 10 | 20 | 20 | - | - |
| Blend* | - | - | - | - | - | - | 10 | - |
| Short-Chain Graft Polymer* | - | - | - | - | - | - | - | 10 |
| Notched Izod Impact Strength (kg·cm/cm) | 25 | 35 | 45 | 28 | 30 | 18 | 5 | 16 |
| Heat Distortion Temperature (°C) (18.6 kg/cm²) | 80 | 78 | 75 | 77 | 72 | 75 | 70 | 77 |
| Chemical Resistance (appearance) | X | X | △ | △ | △ | △ | X | X |

| | | | | | | | | |
|---|---|---|---|---|---|---|---|---|
| * Parts by weight based on 100 parts by weight of PBT + polycarbonate. | | | | | | | | |

### Examples 42 to 48

Polybutylene terephthalate (which was denoted by PBT in tables) having an intrinsic viscosity of 3.5 dl/g, PPS (trade name Lighton R-4; made by Philips Petroleum Co., Ltd.) and the multi-phase structure thermoplastic resin IIIa obtained in Preparation Example 1 were melted and blended together in ratios in Table 9.

Procedures of melting and mixing as well as the formation of specimens were carried out in the same manner as in Example 1. Furthermore, layer peeling on the broken portion of each specimen was observed.

**Table 9**

| Example | 42 | 43 | 44 | 45 | 46 | 47 | 48 |
|---|---|---|---|---|---|---|---|
| PBT (wt%) | 20 | 20 | 40 | 50 | 60 | 70 | 80 |
| PPS (wt%) | 80 | 80 | 60 | 50 | 40 | 30 | 20 |
| Multi-Phase Structure Thermoplastic Resin IIIa* | 5 | 15 | 15 | 15 | 15 | 15 | 15 |
| Notched Izod Impact Strength (kg·cm/cm) | 5.0 | 6.0 | 6.3 | 6.2 | 7.3 | 8.0 | 9.5 |
| Heat Distortion Temperature (°C) (18.6 kg/cm²) | 145 | 140 | 130 | 125 | 103 | 95 | 90 |
| Delamination | none | none | none | none | none | none | none |

| | | | | | | | |
|---|---|---|---|---|---|---|---|
| * Parts by weight based on 100 parts by weight of PBT + PPS. | | | | | | | |

### Examples 49 to 56

The same procedure as in the above examples was repeated with the exception that the graft multi-phase structure thermoplastic resin IIIa was replaced by the graft polymerization precursor IIIa' obtained in Preparation Example 1 and that a glass fiber having an average fiber length of 5.0 mm and a diameter of 10 µm. The results are set forth in Table 10.

### Comparative Examples 15 to 21

Apart from these examples, the same procedure as in Example 1 was repeated with the exception that the ethylene-glycidyl methacrylate copolymer used in Preparation Example 1, the blend obtained in Reference Example 2 and the short-chain graft polymer obtained in Reference Example 3 were used instead of these multi-phase structure thermoplastic resin IIIa. The results are set forth in Table 11.

**Table 10**

| Example | 49 | 50 | 51 | 52 | 53 | 54 | 55 | 56 |
|---|---|---|---|---|---|---|---|---|
| PBT (wt%) | 20 | 20 | 50 | 50 | 50 | 70 | 80 | 80 |
| PPS (wt%) | 80 | 80 | 50 | 50 | 50 | 30 | 20 | 20 |
| Multi-Phase Theremoplastic Resin IIIa* | 15 | - | 15 | - | 15 | - | 15 | - |
| Graft Polymerization Precursor IIIa′* | - | 15 | - | 15 | - | 15 | - | 15 |
| Glass Fiber* | 30 | - | 30 | 30 | 30 | 30 | 30 | - |
| Notched Izod Impact Strength (kg·cm/cm) | 9.5 | 7.0 | 10.1 | 10.5 | 12.0 | 12.7 | 14.0 | 10.0 |
| Heat Distortion Temperature (°C) (18.6 kg/cm²) | 255 | 143 | 235 | 240 | 215 | 220 | 200 | 85 |

| | | | | | | | | |
|---|---|---|---|---|---|---|---|---|
| * Parts by weight based on 100 parts by weight of PBT + PPS. | | | | | | | | |

**Table 11**

| Comp. Example | 15 | 16 | 17 | 18 | 19 | 20 | 21 |
|---|---|---|---|---|---|---|---|
| PBT (wt%) | 20 | 50 | 50 | 70 | 80 | 70 | 70 |
| PPS (wt%) | 80 | 50 | 50 | 30 | 20 | 30 | 30 |
| Ethylene-Glycidyl Methacrylate Copolymer*1 | 10 | 10 | 20 | 20 | 20 | - | - |
| Blend*1 | - | - | - | - | - | - | 20 |
| Short-Chain Graft Polymer*1 | - | - | - | - | - | 20 | - |
| Notched Izod Impact Strength (kg·cm/cm) | 3.0 | 4.7 | 5.1 | 6.0 | 7.5 | 6.6 | 2.0 |
| Heat Distortion Temperature (°C) (18.6 kg/cm²) | 130 | 123 | 118 | 90 | 80 | 87 | 63 |
| Delamination*2 | X | X | △ | △ | △ | △ | X |

| | | | | | | | |
|---|---|---|---|---|---|---|---|
| *1 Parts by weight based on 100 parts by weight of PBT + PPS. | | | | | | | |
| *2 "X" means that layer peeling was present, and "△" means that it was slightly present. | | | | | | | |

As described in the above-mentioned examples, the thermoplastic resin composition of the present invention, which has been prepared by using a specific multi-phase thermoplastic resin, can improve compatibility with other engineering plastics and can provide various molded articles which are excellent in impact resistance and appearance.

The thermoplastic resin composition of the present invention effectively has different features of the raw material resins, and it is excellent in moldability, impact resistance, heat resistance, dimensional resistance and chemical resistance. The impact resistance and heat resistance of the composition of the present invention can be regulated by suitably selecting the ratio of the multi-phase structure thermoplastic resins to be mixed, and therefore the present invention can meet a variety of demands.

As is apparent from the foregoing, the thermoplastic resin composition of the present invention can be widely utilized as materials for, e.g., automobile parts, electrical and electronic machine parts, and other industrial parts.

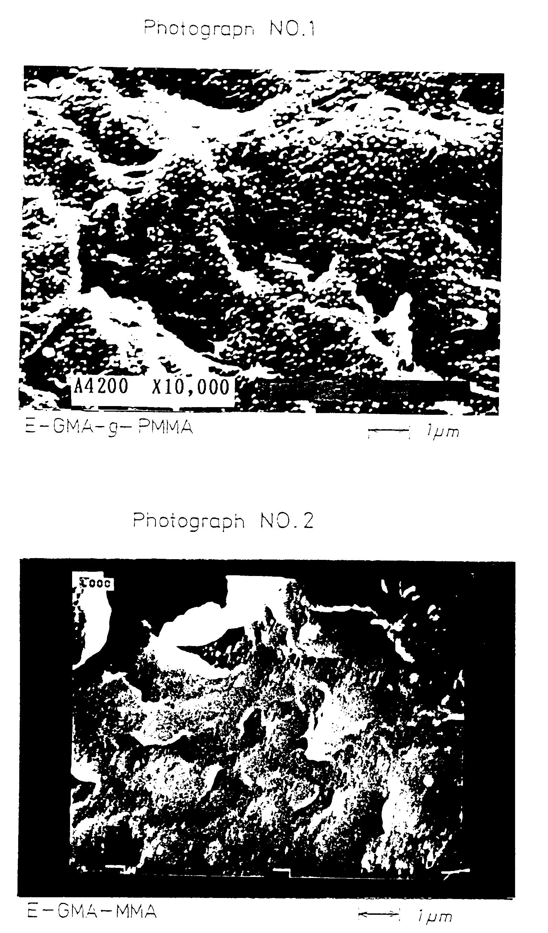

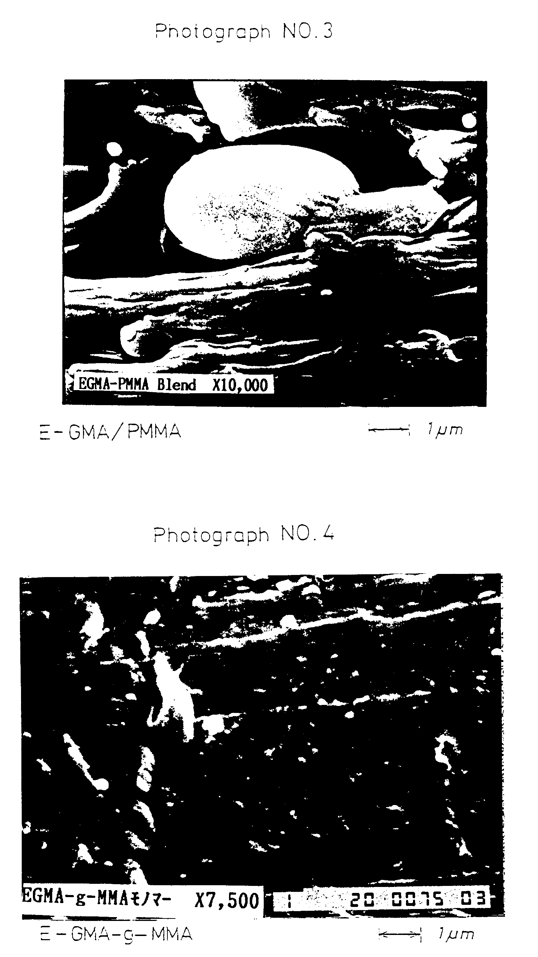

## Claims

1. A thermoplastic resin composition which comprises
(I) 99 to 1 % by wt. of an aromatic polyester resin, formed from an aromatic dicarboxylic acid or a derivative thereof, capable of forming the polyester and an aliphatic diol having 2 to 10 carbon atoms or a long-chain glycol having a molecular weight of 400 to 6,000,
(II) 1 to 99 % by wt. of at least one kind of resin selected from the group consisting of a polyphenylene ether resin, a mixture of a polyphenylene ether resin and a styrene polymer, a polycarbonate resin, and a polyarylene sulfide resin,
(III) 0.1 to 100 parts by wt., based on 100 parts by wt. of the aforesaid resins (I) + (II), of a multi-phase structure thermoplastic resin which is formed by melting and kneading a graft polymerization precursor (A) which is obtainable by the process of first adding 5 to 400 p.b.w. of at least one monomer selected from vinyl aromatic monomers, acrylate monomers, methacrylate monomers, acrylonitrile, methacrylonitrile, vinyl ester monomers, acrylamide monomers, methacrylamide monomers and monoesters and diesters of maleic anhydride and maleic acid, 0.1 to 10 p.b.w., based on 100 p.b.w. of said at least one monomer, of at least one of radical polymerizable or copolymerizable organic peroxides and a radical polymerization initiator to an aqueous suspension of 100 p.b.w. of an epoxy group-containing olefin copolymer, wherein said radical polymerizable or copolymerizable organic peroxides are represented by the following general formulae (a) and (b) 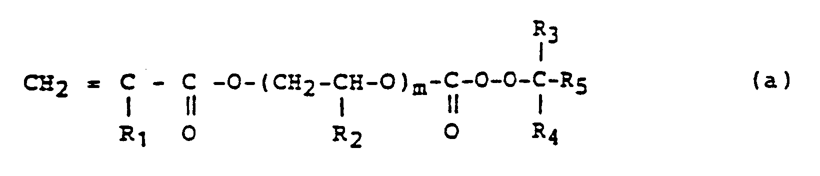 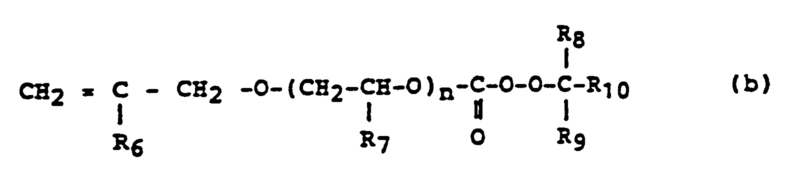 wherein R₁ is a hydrogen atom or an alkyl group having 1 or 2 carbon atoms , each of R₂ and R₇ is a hydrogen atom or a methyl group, R₆ is a hydrogen atom or an alkyl group having 1 to 4 carbon atoms, each of R₃, R₄, R₈ and R₉ is an alkyl group having 1 to 4 carbon atoms ,each of R₅ and R₁₀ is an alkyl group having 1 to 12 carbon atoms, a phenyl group, an alkyl-substituted phenyl group or a cycloalkyl group having 3 to 12 carbon atom, m is 1 or 2, and n is 0, 1 or 2,
then heating the suspension under such conditions that the decomposition of the radical polymerization initiator does not occur substantially, in order to impregnate the epoxy group-containing olefin copolymer with said at least one monomer, the radical polymerizable or copolymerizable organic peroxide and the radical polymerization initiator, and raising the temperature of this aqueous suspension, when the degree of the impregnation has reached at least 50 % by weight of the original total weight of said at least one monomer, peroxide and initiator, in order to copolymerize said at least one monomer with the radical polymerizable or copolymerizable organic peroxide in the epoxy group-containing olefin copolymer wherein said copolymerisation of said at least one monomer is conducted to achieve an average polymerisation degree of 5 to 10,000.

2. A thermoplastic resin composition according to Claim 1 wherein said copolymerization is conducted to achieve an average polymerization degree of 10 to 5,000.

3. A thermoplastic resin composition according to Claim 1 or 2 wherein said epoxy group-containing olefin copolymer is composed of 60 to 99.5 % by wt. of ethylene, 40 to 0.5 % by weight of glycidyl acrylate or methacrylate, and 0 to 39.5 % by weight of another unsaturated monomer.

4. A thermoplastic resin composition according to any of the Claims 1 to 3, wherein an inorganic filler (IV) is additionally blended in an amount of 1 to 150 parts by wt., based on 100 parts by wt. of the thermoplastic resin composition (I) + (II) + (III).

## Patentansprüche

1. Thermoplastische Harzzusammensetzung, enthaltend
(I) 99 - 1 Gew.-% eines aromatischen Polyesterharzes, das aus einer aromatischen Dicarbonsäure oder einem Derivat derselben, welches zur Polyesterbildung befähigt ist, und einem aliphatischen Diol mit 2 - 10 Kohlenstoffatomen oder einem langkettigen Glycol mit einem Molekulargewicht von 400 bis 6000 gebildet ist,
(II) 1 - 99 Gew.-% mindestens einer Art eines Harzes, welches ausgewählt ist aus der aus Polyphenylenetherharz, einem Gemisch aus Polyphenylenetherharz und einem Styrolpolymer, einem Polycarbonatharz und einem Polyarylensulfidharz bestehenden Gruppe,
(III) 0,1 - 100 Gew.-Teile, bezogen auf 100 Gew.-Teile der vorstehenden Harze (I) und (II), eines thermoplastischen Harzes mit Mehrphasenstruktur, welches gebildet wird durch Schmelzen und Kneten eines Pfropfpolymerisations-Vorläufers (A), welcher erhältlich ist durch vorherige Zugabe von 5 - 400 Gew.-Teilen mindestens eines Monomers, welches ausgewählt ist unter aromatischen Vinylmonomeren, Acrylatmonomeren, Methacrylatmonomeren, Acrylnitril, Methacrylnitril, Vinylestermonomeren, Acrylamidmonomeren, Methacrylamidmonomeren und Monoestern und Diestern von Maleinsäureanhydrid und Maleinsäure, 0,1 - 10 Gew.-Teilen, bezogen auf 100 Gew.-Teile des mindestens einen Monomers, mindestens eines radikalisch polymerisierbaren oder copolymerisierbaren organischen Peroxids und einem Radikalpolymerisations-Initiator zu einer wässerigen Suspension von 100 Gew.-Teilen eines Epoxy-Gruppen enthaltenden Olefincopolymers, wobei die radikalisch polymerisierbaren oder copolymerisierbaren organischen Peroxide durch die folgenden allgemeinen Formeln (a) und (b) dargestellt sind: 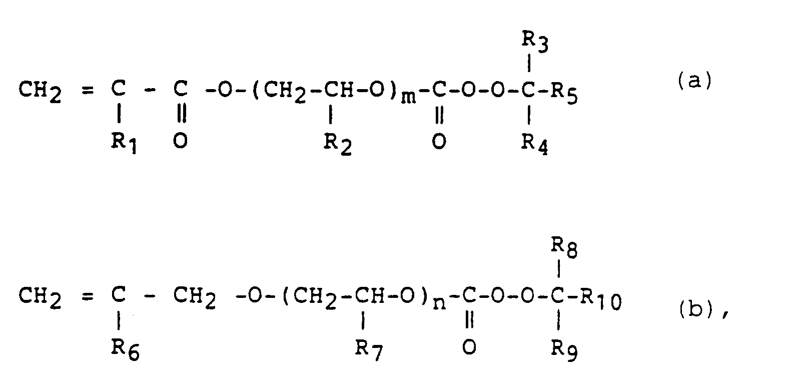 worin R₁ ein Wasserstoffatom oder eine Alkylgruppe mit 1 oder 2 Kohlenstoffatomen ist, R₂ und R₇ jeweils ein Wasserstoffatom oder eine Methylgruppe sind, R₆ ein Wasserstoffatom oder eine Alkylgruppe mit 1 bis 4 Kohlenstoffatomen ist, R₃, R₄, R₈ und R₉ jeweils eine Alkylgruppe mit 1 bis 4 Kohlenstoffatomen sind, R₅ und R₁₀ jeweils eine Alkylgruppe mit 1 bis 12 Kohlenstoffatomen, eine Phenylgruppe, eine alkylsubstituierte Phenylgruppe oder eine Cycloalkylgruppe mit 3 bis 12 Kohlenstoffatomen sind, m 1 oder 2 ist und n 0,1 oder 2 ist,
anschließendes Erhitzen der Suspension unter solchen Bedingungen, daß die Zersetzung des Radikalpolymerisations-Initiators im wesentlichen nicht vonstatten geht, wobei das Epoxy-Gruppen enthaltende Olefincopolymer mit dem mindestens einen Monomer, dem radikalisch polymerisierbaren oder copolymerisierbaren organischen Peroxid und dem Radikalpolymerisations-Initiator imprägniert wird, und Erhöhen der Temperatur der wässerigen Suspension, wenn der Imprägnierungsgrad mindestens 50 Gew.-% des ursprünglichen Gesamtgewichts des mindestens einen Monomers, Peroxids und Initiators erreicht hat, wobei das mindestens eine Monomer mit dem radikalisch polymerisierbaren oder copolymerisierbaren organischen Peroxid in dem Epoxy-Gruppen enthaltenden Olefincopolymer copolymerisiert wird, wobei die Copolymerisation des mindestens einen Monomers so durchgeführt wird, daß ein durchschnittlicher Polymerisationsgrad von 5 bis 10000 erreicht wird.

2. Thermoplastische Harzzusammensetzung gemäß Anspruch 1, wobei die Copolymerisation so durchgeführt wird, daß ein durchschnittlicher Polymerisationsgrad von 10 bis 5000 erreicht wird.

3. Thermoplastische Harzzusammensetzung gemäß Anspruch 1 oder 2, worin das Epoxy-Gruppen enthaltende Olefincopolymer aus 60 bis 99,5 Gew.-% Ethylen, 40 bis 0,5 Gew.-% Glycidylacrylat oder -methacrylat und 0 bis 39,5 Gew.-% eines anderen ungesättigten Monomers zusammengesetzt ist.

4. Thermoplastische Harzzusammensetzung gemäß einen der Ansprüche 1 bis 3, worin zusätzlich ein anorganisches Füllmaterial (IV) in einer Menge von 1 bis 150 Gew.-Teilen, bezogen auf 100 Gew.-Teile der thermoplastischen Harzzusammensetzung (I) + (II) + (III), zugemischt ist.

## Revendications

1. Composition de résine thermoplastique qui comprend :
(I) 99 à 1 % en poids d'une résine Polyester aromatique constituée à partir d'un acide dicarboxylique aromatique ou d'un de ses dérives capables de former le polyester et d'un diol aliphatique ayant de 2 à 10 atomes de carbone ou d'un glycol à longue chaîne ayant un poids moléculaire de 400 à 6 000,
(II) 1 à 99 % en poids d'au moins une sorte de résine choisie dans le groupe constitué d'une résine poly(éther de phénylène), un mélange d'une résine poly(éther de phénylène) et d'un polymère de styrène, une résine polycarbonate et une résine poly(sulfure d'arylène),
(III) 0,1 à 100 parties en poids, par rapport à 100 parties en poids des résines (I) + (II) indiqué ci-dessus, d'une résine thermoplastique à structure multiphasique qu'on réalise en fondant et en malaxant un précurseur de polymérisation par greffage (A) qu'on peut obtenir par le procédé suivant : en ajoutant d'abord 5 à 400 parties en poids d'au moins un monomère choisi parmi les monomères vinyliques aromatiques, les monomères acrylates, les monomères méthacrylates, l'acrylonitrile, le méthacrylonitrile, les monomères esters vinyliques, les monomères acrylamides, les monomères méthacrylamides et les monoesters et diesters d'anhydride maléique et d'acide maléique, 0,1 à 10 parties en poids par rapport à 100 parties en poids dudit monomère, d'au moins un peroxyde organique polymérisable ou copolymérisable par voie radicalaire et un initiateur de polymérisation radicalaire à une suspension aqueuse de 100 parties en poids d'un copolymère d'oléfine comprenant des groupes époxy, dans lesquels lesdits peroxydes organiques polymérisables ou copolymérisables par voie radicalaire sont représentés par les formules générales suivantes (a) et (b) 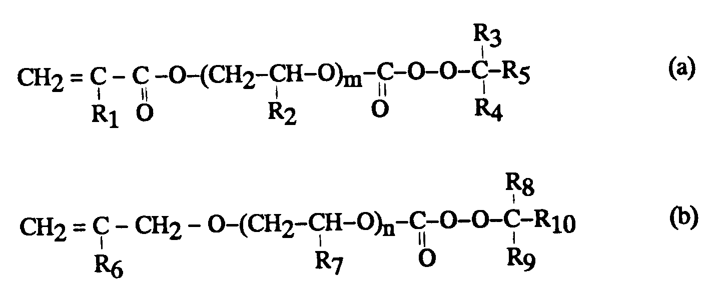 dans lesquelles R₁ est un atome d'hydrogène ou un groupe alkyle ayant 1 à 2 atomes de carbone, chacun de R₂ et R₇ est un atome d'hydrogène ou un groupe méthyle, R₆ est un atome d'hydrogène ou un groupe alkyle ayant de 1 à 4 atomes de carbone, chaque groupe R₃, R₄, R₈ et R₉ est un groupe alkyle ayant de 1 à 4 atomes de carbone, chacun de R₅ et R₁₀ est un groupe alkyle ayant de 1 à 12 atomes de carbone, un groupe phényle, un groupe phényle alkyle substitué ou un groupe cycloalkyle ayant de 3 à 12 atomes de carbone, m est 1 ou 2, et n est 0,1 ou 2,
puis on chauffe la suspension dans des conditions telles que la décomposition de l'initiateur de polymérisation radicalaire ne se produit pas sensiblement, en vue d'imprégner le copolymère oléfine contenant le groupe époxy d'au moins un des monomères, du peroxyde organique copolymérisable ou polymérisable par voie radicalaire et de l'initiateur de polymérisation radicalaire, et on augmente la température de cette suspension aqueuse, quand le degré d'imprégnation atteint au moins 50% en poids du poids total initial d'au moins un monomère, peroxyde et initiateur, en vue de copolymériser au moins un monomère avec le peroxyde organique polymérisable ou copolymérisable par voie radicalaire dans le copolymère d'oléfine contenant les groupes époxy, dans lesquels ladite copolymérisation d'au moins un monomère est réalisée de façon à obtenir un taux moyen de polymérisation de 5 à 10 000.

2. Composition de résine thermoplastique selon la revendication 1, dans laquelle on réalise la copolymérisation pour obtenir un taux de polymérisation moyen de 10 à 5000.

3. Composition de résine thermoplastique selon la revendication 1 ou 2, dans laquelle ledit copolymère d'oléfine contenant des groupes époxy est composé pour 60 à 99,5% en poids d'éthylène, 40 à 0,5% en poids d'acrylate a de méthacrylate de glycidyle, et 0 à 39,5 % en poids d'un autre monomère insaturé.

4. Composition de résine thermoplastique selon l'une quelconque des revendications 1 à 3, dans laquelle on mélange en plus une charge minérale (IV) en une quantité de 1 à 150 parties en poids, par rapport à 100 parties en poids de la composition de résine thermoplastique (I) + (II) + (III).
